# EUROPÄISCHE PATENTSCHRIFT

(11) **EP 3 538 386 B1**
(45) Veröffentlichungstag und Bekanntmachung des Hinweises auf die Patenterteilung: **01.09.2021**
(21) Anmeldenummer: 18700535.0
(22) Anmeldetag: 04.01.2018
(51) Int. Cl.: B60H 1/32, B60H 1/00

(54) **FAHRZEUG MIT EINER ZWEISTUFIGEN KÄLTEANLAGE**
VEHICLE HAVING A TWO-STAGE COOLING SYSTEM
VÉHICULE COMPRENANT UN SYSTÈME FRIGORIFIQUE À DEUX ÉTAGES

(30) Priorität: 25.01.2017 DE 102017201186
(43) Veröffentlichungstag der Anmeldung: 18.09.2019
(73) Patentinhaber: Siemens Mobility GmbH, 81739 München (DE)
(72) Erfinder: KEMMERLING, Frank, 41472 Neuss (DE); KÜBECK, Thomas, 47929 Grefrath (DE)
(86) Internationale Anmeldenummer: PCT/EP2018/050202
(87) Internationale Veröffentlichungsnummer: WO 2018/137908

(56) Entgegenhaltungen:
- EP-A1- 1 520 737
- EP-A1- 2 716 480
- WO-A1-2007/088012
- DE-A1- 19 625 927
- JP-A- H09 169 207
- US-A- 5 473 912

## Beschreibung

Die Erfindung betrifft ein großräumiges Fahrzeug mit wenigstens einer Kältemaschine mit einem ersten Kältemittelkreis-lauf.

In Kältemaschinen zur Kühlung von Kühlschränken einer Bordküche von Fahrzeugen des Personenverkehrs wurden bisher Kältemittel, wie beispielsweise R134a oder R404a zur Tiefkühlung eingesetzt, deren Einsatz aufgrund ihres Treibhauspotentials (Global Warming Potential-Werte, kurz GWP-Werte von über 150) eingeschränkt oder verboten ist. Weitere Kältemittel, wie z.B. das natürliche Kältemittel Propan oder teilhalogenierte Flur-Olefine HFO1234yf oder HFO1234ze sind brennbar oder bilden beim Austritt entzündliche Gemische mit Luft und sind daher nicht innerhalb von Fahrzeugen einzusetzen.

Die Druckschrift DE 196 25 927 A1 offenbart ein gattungsgemäßes Fahrzeug gemäß dem Oberbegriff des unabhängigen Patentanspruchs 1. Die Druckschriften EP 1 520 737 A1, WO 2007/088012 A1 sowie EP 2 716 480 A1 offenbaren weitere Fahrzeuge mit Kältemaschinen.

Der Erfindung liegt die Aufgabe zugrunde, ein Fahrzeug mit einer sicheren und umweltfreundlichen Kälteanlage vorzuschlagen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes großräumiges Fahrzeug des Personenverkehrs, beispielsweise ein Schienenfahrzeug, umfasst wenigstens eine Kältemaschine mit zumindest einem ersten Kältemittelkreislauf, wobei die Kältemaschine mitsamt dem ersten Kältemittelkreislauf unterflur angeordnet. Das Fahrzeug umfasst erfindungsgemäß fürderhin wenigstens einen zweiten Kältemittelkreislauf, welcher zumindest teilweise innerhalb des Fahrzeugs angeordnet ist, und wenigstens einen Zwischenwärmetauscher zum Wärmeaustausch zwischen dem ersten Kältemittelkreislauf und dem zweiten Kältemittelkreislauf. Durch die zwei voneinander getrennten Kältemittelkreisläufe kann auch von einer zweistufigen Kälteanlage gesprochen werden. Der erste Kältemittelkreislauf verläuft insbesondere ausschließlich außerhalb eines Innen- insbesondere eines Passagierraums des Fahrzeugs, während zumindest ein Teil des zweiten Kältemittelkreislaufs innerhalb des Fahrzeugs verläuft. Der Zwischenwärmetauscher ist unterflur angeordnet, insbesondere derart, dass der erste Kältemittelkreislauf vollständig unterflur, so dass das erste Kältemittel ausschließlich außerhalb des Innenraums des Fahrzeugs geführt ist.

Allgemein beruhen Kältemaschinen, insbesondere Kompressionskälteanlagen, auch oft als Klimaanlagen bezeichnet, meist auf einem thermodynamischen Kreisprozess. Ein Kältemittel nimmt abwechselnd Wärme bei niedriger Temperatur auf und gibt diese bei höherer Temperatur wieder ab. Solche Maschinen arbeiten entweder durch abwechselndes Verdampfen und Kondensieren des Kältemittels, oder mit einem stets gasförmigen Medium.

In dem Kreisprozess wird ein meist gasförmiges Kältemittel von einem Kompressor verdichtet, wobei es sich erwärmt. In einem nachgeschalteten Wärmeübertrager gibt es Wärme an die Umgebung ab, wodurch es abkühlt. Dabei kann das Kältemittel gasförmig bleiben oder es kondensiert. Dann wird der Wärmeübertrager auch Verflüssiger genannt. Flüssiges Kältemittel wird anschließend zu einem Drosselorgan geleitet, wo sein Druck reduziert wird. Auch das gasförmige Kältemittel wird entspannt und weiter abkühlt, beispielsweise in einer Turbine, die einen Teil der vom Verdichter verbrauchten Energie zurückgewinnen kann. Das Kältemittel nimmt dann Wärme aus dem zu kühlenden Raum auf, beispielsweise in einem zweiten Wärmeübertrager, im zweiten Fall durch Verdampfen bei niedriger Temperatur in einem sogenannten Verdampfer auf, bevor es wieder verdichtet wird. Der Kreisprozess ist somit geschlossen.

Der Prozess kann auch offen gestaltet werden, indem Luft aus der Umgebung angesaugt, verdichtet, abgekühlt und entspannt wird, wonach sie dem zu kühlenden Raum zugeleitet wird.

Gemäß der Erfindung ist der erste Kältemittelkreislauf als ein geschlossener Kältemittelkreislauf ausgebildet. Auch der zweite Kältemittelkreislauf kann als ein geschlossener Kältemittelkreislauf ausgebildet sein.

Der erste Kältemittelkreislauf kann Primärkreislauf genannt werden. Der zweite Kältemittelkreislauf kann analog als Sekundärkreislauf bezeichnet werden.

Die Kältemaschine ist als Kompressionskälteanlage ausgebildet, wobei wenigstens ein Verdichter und wenigstens ein Drosselorgan im ersten Kältemittelkreislauf angeordnet sind. Kompressoren werden üblicherweise, wie auch weitergebildet in der vorliegenden Erfindung, als Verdichter eingesetzt. Darüber hinaus kann die Kältemaschine einen Wärmeübertrager im ersten Kältemittelkreislauf aufweisen, welcher zur Umwelt des Fahrzeugs hin wirkt und entsprechend frei zur Umgebung des Fahrzeugs am Fahrzeug angeordnet ist, um Wärme an die Umgebung abzugeben, wodurch ein erstes Kältemittel im ersten Kältemittelkreislauf abkühlt wird. Kältemittel können auch als Kühlmittel bezeichnet werden. Kältemittel sind zum Abtransport von Wärme eingesetzte Stoffe oder Stoffgemische. Ein flüssiges Kältemittel liegt dabei zumindest bei Laborbedingungen (20°C, 1013mbar) in flüssiger Form vor. Ein gasförmiges Kältemittel läge entsprechend zumindest bei Laborbedingungen (20°C, 1013mbar) in gasförmiger Form vor.

Erfindungsgemäß werden voneinander verschiedene Kältemittel im ersten Kältekreislauf und im zweiten Kältekreislauf eingesetzt. Das erste und das zweite Kältemittel unterscheiden sich hinsichtlich ihrer chemischen Struktur und hinsichtlich ihrer physikalischen Eigenschaften.

Insbesondere ist das zweite Kältemittel nicht brennbar. Das erste Kältemittel weist insbesondere einen GWB von unter 150 auf. Erfindungsgemäß umfasst das erste Kältemittel Propan. Das zweite Kältemittel kann aus einer Gruppe von Alkoholen entnommen sein. Es kann z.B. ein Glykol umfassen.

Die Kältemaschine kann fürderhin wenigstens eine Umwälzpumpe im ersten Kältemittelkreislauf zur Förderung des ersten Kältemittels im ersten Kältemittelkreislauf aufweisen.

Ein im ersten Kältemittelkreislauf zirkulierendes, insbesondere flüssiges, erstes Kältemittel wird durch den Zwischenwärmetauscher als Wärmequelle geführt, erwärmt sich dabei und gibt die aufgenommene Wärme an die zentrale Kühlanlage der Kältemaschine als Wärmesenke wieder ab. Zur zentralen Kühlanlage der Kältemaschine zählen wiederum, neben dem zentralen Wärmeübertrager, insbesondere einem dritten Wärmetauscher, weitergebildet zumindest ein Kondensator, mindestens ein Verdichter und mindestens ein Verdampfer. Gegebenenfalls umfasst sie fürderhin eine Drossel zwischen dem Kondensator und dem Verdampfer. Des Weiteren kann sie mindestens ein Gebläse umfassen.

Auch der zweite Kältemittelkreislauf kann wenigstens eine Umwälzpumpe zur Förderung eines zweiten Kältemittels im zweiten Kältemittelkreislauf aufweisen. Die Umwälzpumpe ist weitergebildet ausschließlich zur Förderung des zweiten Kältemittels ausgebildet und nicht zur Verdichtung des zweiten Kältemittels geeignet.

Zur Regelung des Durchflusses an erstem Kältemittel durch den zumindest einen Zwischenwärmetauscher kann das Fahrzeug insbesondere zumindest ein erstes Ventil aufweisen, welches beispielsweise vor dem vorgegebenen Zwischenwärmetauscher im ersten Kältemittelkreislauf angeordnet sein kann. In analoger Weise kann das Fahrzeug zur Regelung des Durchflusses an zweitem Kältemittel durch den zumindest einen Zwischenwärmetauscher zumindest ein zweites Ventil aufweisen, welches beispielsweise vor dem vorgegebenen Zwischenwärmetauscher im zweiten angeordnet Kältemittelkreislauf sein kann.

Der zweite Kältemittelkreislauf ist gemäß einer weiteren Weiterbildung frei von einem Verdichter und/oder frei von einem Kondensator und/oder frei von einem Verdampfer. Er kann auch frei von einem Drosselorgan sein.

Darüber hinaus umfasst der zweite Kältemittelkreislauf wenigstens einen weiteren, zweiten Wärmetauscher zur Kühlung eines Kühlschranks einer Bordküche. Er ist dann entsprechend geeignet ausgebildet und innerhalb des Fahrzeugs angeordnet. Es können auch mehrere zu kühlende Stellen und damit mehrere zweite Wärmetauscher vorgesehen sein.

Der Zwischenwärmetaucher ist nach einer Ausführungsform der Erfindung als Rekuperator, insbesondere als Gegenstromwärmetauscher ausgebildet, so dass das erste Kältemittel und das zweite Kältemittel sich entgegenkommend aneinander vorbeiströmen.

Durch die zwei voneinander getrennten Kältemittelkreisläufe können ohne zusätzliche Gefahr für die Passagiere Kältemittel mit einem GWP unter 150 eingesetzt werden. Somit sind gegebenenfalls Brennbare Kältemittel außerhalb des Passagierbereichs angeordnet, während innerhalb nur schwer entflammbare und somit harmlose Kältemittel eingesetzt werden. Bei einer Leckage im ersten Kältemittelkreislauf können die potentiell gefährlicheren Kältemittel nicht in das Wageninnere entweichen.

Die Erfindung lässt zahlreiche Ausführungsformen zu. Sie wird anhand der nachfolgenden Figur näher erläutert. Diese zeigt schematisch einen Schaltplan einer erfindungsgemäßen zweistufigen Kälteanlage eines Fahrzeugs.

Das Fahrzeug weist einen Fahrzeugboden 11 auf, welcher einen Innenraum des Fahrzeugs nach unten hin begrenzt. Ausschließlich unterflur und damit unterhalb des Fahrzeugbodens 11 ist eine Kältemaschine 1 mit einem ersten Kältemittelkreislauf 2 angeordnet.

Im ersten Kältemittelkreislauf 2 wird ein erstes Kältemittel mittels eines Rohrleitungssystems durch verschiedene Komponenten der Kältemaschine 1 geführt. Dargestellt sind hier lediglich eine zentrale Kühlanlage 3, eine erste Umwälzpumpe 4 zur Förderung des ersten Kältemittels, ein erstes Ventil 5 zur weiteren Steuerung des Kältemittelflusses sowie ein Zwischenwärmetauscher 6, in welchem das erste Kältemittel erwärmt wird.

Die zentrale Kühlanlage 3 der Kältemaschine 1 fasst einen zentralen Wärmeübertrager, beispielsweise in Form eines Wärmetauschers, einen Kondensator, einen Verdichter und einen Verdampfer um. Sie umfasst fürderhin eine Drossel zwischen dem Kondensator und dem Verdampfer. Des Weiteren kann sie mindestens ein Gebläse umfassen. Das erste Kältemittel wird mittels der zentralen Kühlanlage 3 der Kältemaschine 1 abgekühlt. Die Wärme wird dabei insbesondere mittels des Wärmeübertragers an die Umwelt des Fahrzeugs abgegeben.

Überflur und damit innerhalb eines den Innen- insbesondere einen Passagierraum zur Umwelt hin abgegrenzten Bereichs 12 des Fahrzeugs, beispielsweise einen Wagenkasten-Rohbau eines Schienenfahrzeugs, verläuft ein überwiegender Teil eines zweiten Kältemittelkreislaufs 10.

Auch im zweiten Kältemittelkreislauf 10 wird ein zweites Kältemittel mittels eines Rohrleitungssystems durch verschiedene Komponenten geführt. Eine zweite Umwälzpumpe 8 ist vorgesehen zur Förderung des zweiten Kältemittels, sowie ein erstes Ventil 9 zur weiteren Steuerung des Kältemittelflusses. Verbunden ist der erste Kältemittelkreislauf 2 mit dem zweiten Kältemittelkreislauf 10 über den Zwischenwärmetauscher 6. Das zweite Kältemittel wird zunächst im Zwischenwärmetauscher 6 abgekühlt. Dazu wird es am ersten Kältemittel vorbeigeführt, welches dadurch erwärmt wird. Im Zwischenwärmetaucher 6 wird die Wärme vom zweiten Kältemittelkreislauf 10 auf den ersten Kältemittelkreislauf 2 übertragen. Der Zwischenwärmetaucher 6 ist hier als Gegenstrom-Rekuperator ausgestaltet.

Das abgekühlte zweite Kältemittel wird weiter stromabwärts einem weiteren, zweiten Wärmetauscher 7 zugeführt, welcher zur Kühlung eines Kühlschranks einer Bordküche dient. Dabei wird es seinerseits erwärmt und zur Abkühlung wiederum zum Zwischenwärmetauscher geleitet.

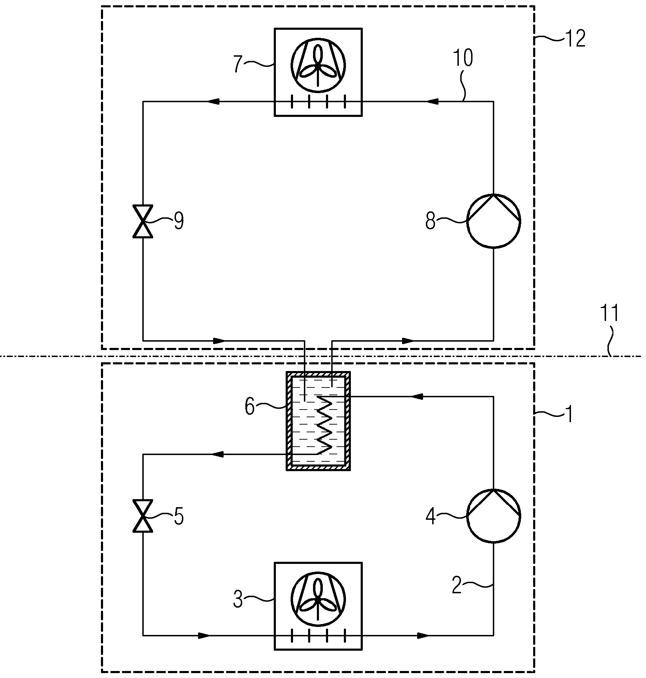

## Patentansprüche

1. Großräumiges Fahrzeug des Personenverkehrs mit wenigstens einer Kältemaschine (1) mit einem ersten Kältemittelkreislauf (2), wobei die Kältemaschine (1) als Kompressionskälteanlage ausgebildet ist, wobei wenigstens ein Verdichter und wenigstens ein Drosselorgan im ersten Kältemittelkreis-lauf (2) angeordnet sind, wobei die Kältemaschine (1) mit dem ersten Kältemittelkreis-lauf (2) unterflur angeordnet ist, wobei ein zweiter Kältemittelkreislauf (10) zumindest teilweise innerhalb des Fahrzeugs verläuft und ein Zwischenwärmetauscher (6) zum Wärmeaustausch zwischen dem ersten Kältemittelkreislauf (2) und dem zweiten Kältemittelkreislauf (10) vorgesehen ist, wobei ein erstes Kältemittel im ersten Kältemittelkreislauf (2) wenigstens eine von einem zweiten Kältemittel im zweiten Kältemittelkreislauf (10) unterschiedliche chemische Struktur aufweist und wobei das erste Kältemittel im ersten Kältemittelkreislauf (2) unterschiedliche physikalische Eigenschaften zum zweiten Kältemittel im zweiten Kältemittelkreislauf (10) aufweist, **dadurch gekennzeichnet, dass** das erste Kältemittel Propan umfasst und wobei der Zwischenwärmetauscher (6) unterflur angeordnet ist und wobei der zweite Kältemittelkreislauf (10) wenigstens einen weiteren, zweiten Wärmetauscher (7) umfasst, welcher zur Kühlung eines Kühlschranks einer Bordküche geeignet ausgebildet und innerhalb des Fahrzeugs angeordnet ist.

2. Fahrzeug nach Anspruch 1, **dadurch gekennzeichnet, dass** der zweite Kältemittelkreislauf (10) frei von einem Verdichter und/oder frei von einem Drosselorgan ist.

3. Fahrzeug nach einem der Ansprüche 1 oder 2, **dadurch gekennzeichnet, dass** der zweite Kältemittelkreislauf (10) wenigstens eine Umwälzpumpe (8) zur Förderung eines zweiten Kältemittels im zweiten Kältemittelkreislauf (10) umfasst.

4. Fahrzeug nach einem der Ansprüche 1 bis 3, **dadurch gekennzeichnet, dass** das zweite Kältemittel ausgewählt ist aus einer Gruppe von Alkoholen.

5. Fahrzeug nach einem der Ansprüche 1 bis 4, **dadurch gekennzeichnet, dass** der zweite Kältemittelkreislauf (10) geschlossen ist.

## Claims

1. Large-capacity passenger transport vehicle having at least one refrigeration machine (1) with a first refrigerant circuit (2), wherein the refrigeration machine (1) is designed as a compression refrigeration system, wherein at least one compressor and at least one throttling element are arranged in the first refrigerant circuit (2), wherein the refrigeration machine (1), including the first refrigerant circuit (2), is arranged underfloor, wherein a second refrigerant circuit (10) runs at least partially within the vehicle and an intermediate heat exchanger (6) for exchange of heat between the first refrigerant circuit (2) and the second refrigerant circuit (10) is provided, wherein a first refrigerant in the first refrigerant circuit (2) has at least a chemical structure which differs from a second refrigerant in the second refrigerant circuit (10), and wherein the first refrigerant in the first refrigerant circuit (2) has different physical properties than the second refrigerant in the second refrigerant circuit (10), **characterized in that** the first refrigerant comprises propane, and wherein the intermediate heat exchanger (6) is arranged underfloor, and wherein the second refrigerant circuit (10) comprises at least one further, second heat exchanger (7), which is suitably designed to cool a refrigerator of an on-board kitchen and is arranged within the vehicle.

2. Vehicle according to Claim 1, **characterized in that** the second refrigerant circuit (10) is free of a compressor and/or free of a throttling element.

3. Vehicle according to either of Claims 1 and 2, **characterized in that** the second refrigerant circuit (10) comprises at least one circulating pump (8) for conveying a second refrigerant in the second refrigerant circuit (10).

4. Vehicle according to one of Claims 1 to 3, **characterized in that** the second refrigerant is selected from a group of alcohols.

5. Vehicle according to one of Claims 1 to 4, **characterized in that** the second refrigerant circuit (10) is closed.

## Revendications

1. Véhicule à grand compartiment du trafic des voyageurs, comprenant au moins une machine (1) frigorifique ayant un premier circuit (2) de fluide frigorigène, dans lequel la machine (1) frigorifique est constituée sous la forme d'une installation frigorifique à compression, dans lequel au moins un compresseur et au moins un organe d'étranglement sont montés dans le premier circuit (2) de fluide frigorigène, dans lequel la machine (1) frigorifique ayant le premier circuit (2) de fluide frigorigène, est disposée sous caisse, dans lequel un deuxième circuit (10) de fluide frigorigène s'étend au moins en partie à l'intérieur du véhicule et il est prévu un échangeur de chaleur (6) intermédiaire pour échanger de la chaleur entre le premier circuit (2) de fluide frigorigène et le deuxième circuit (10) de fluide frigorigène dans lequel un premier fluide frigorigène dans le premier circuit (2) de fluide frigorigène a au moins une structure chimique différente d'un deuxième fluide frigorigène dans le deuxième circuit (10) frigorigène et dans lequel le premier fluide frigorigène dans le premier circuit (2) frigorigène a des propriétés physiques différentes du deuxième fluide frigorigène dans le deuxième circuit (10) de fluide frigorigène, **caractérisé en ce que** le premier fluide frigorigène comprend du propane et dans lequel l'échangeur de chaleur (6) intermédiaire est disposé sous caisse et dans lequel le deuxième circuit (10) de fluide frigorigène comprend au moins un autre deuxième échangeur de chaleur (7), qui est constitué de manière propre à refroidir une armoire frigorifique d'une cuisine de bord et qui est disposé à l'intérieur du véhicule.

2. Véhicule suivant la revendication 1, **caractérisé en ce que** le deuxième circuit (10) de fluide frigorigène n'a pas de compresseur et/ou n'a pas d'organe d'étranglement.

3. Véhicule suivant la revendication 1 ou 2, **caractérisé en ce que** le deuxième circuit (10) de fluide frigorigène comprend au moins une pompe (8) de recirculation pour véhiculer un deuxième fluide frigorigène dans le deuxième circuit (10) de fluide frigorigène.

4. Véhicule suivant l'une des revendications 1 à 3, **caractérisé en ce que** le deuxième fluide frigorigène est choisi dans un groupe d'alcools.

5. Véhicule suivant l'une des revendications 1 à 4, **caractérisé en ce que** le deuxième circuit (10) de fluide frigorigène est fermé.
